# EUROPÄISCHE PATENTSCHRIFT

(11) **EP 1 148 221 B1**
(45) Veröffentlichungstag und Bekanntmachung des Hinweises auf die Patenterteilung: **02.02.2005**
(21) Anmeldenummer: 01109019.8
(22) Anmeldetag: 11.04.2001
(51) Int. Cl.: F02C 7/18, B64D 33/08, F01D 11/24, F01D 25/14, F01D 25/12

(54) **Verfahren und Vorrichtung zum Kühlen des Gehäuses von Turbinen von Strahltriebwerken**
Method and device to cool the casing of turbojet engines
Méthode et dispositif de refroidissement du boîtier de turboréacteurs

(30) Priorität: 19.04.2000 DE 10019437
(43) Veröffentlichungstag der Anmeldung: 24.10.2001
(73) Patentinhaber: Rolls-Royce Deutschland Ltd & Co KG, 15827 Dahlewitz (DE)
(72) Erfinder: Boeck, Alexander, 82288 Kottgeisering (DE)
(74) Vertreter: Weber, Joachim, Dr.

(56) Entgegenhaltungen:
- GB-A- 2 048 386
- GB-A- 2 103 718
- US-A- 4 069 662
- US-A- 4 849 895

## Beschreibung

Die Erfindung bezieht sich auf ein Verfahren zum Kühlen des Gehäuses von Turbinen von Strahltriebwerken nach dem Oberbegriff des Anspruchs 1.

Hinsichtlich der Vorrichtung bezieht sich die Erfindung auf eine Vorrichtung zur Kühlung des Gehäuses von Turbinen und Strahltriebwerken nach dem Oberbegriff des Anspruchs 6.

Aus dem Stand der Technik ist bekannt, bei Zweistrom-Turbinen-Luftstrahltriebwerken einen großen, einstufigen Fan vorzusehen, der einen Teil der Luft durch das Kerntriebwerk leitet, während ein anderer Teil der Luftströmung als Bypass durch einen geschlossenen Ringkanal geführt wird. Weiterhin ist es bekannt, zu Zwecken der Spaltkontrolle in einer Hochdruckturbine bzw. einer Niederdruckturbine zur Vermeidung einer verlustreichen Umströmung der Schaufelköpfe die Kopfspiele klein zu halten. Zu diesem Zwecke werden die Gehäuse in Abhängigkeit von dem Betriebszustand des Triebwerks aktiv mit Kühlluft beaufschlagt. Durch die hierdurch bewirkte Verkleinerung des Gehäuseinnendurchmessers kann das Kopfspiel eingestellt werden.

Der Stand der Technik zeigt unterschiedliche Konstruktionen, um eine geeignete Gehäusekühlung zu erzielen. So ist es beispielsweise aus der US-PS 4,493,184 bekannt, aus der Bypass-Strömung Kühlluft mittels eines Einlaufkanals abzuzweigen. Diese Kühlluft wird einer Vielzahl von konzentrisch angeordneten Ringkanälen zugeführt, die mit Austrittsöffnungen versehen sind, um die Kühlluft auf die Außenwandung der Gehäuse der Turbinen zu leiten. Ähnliche Konstruktionen zeigen die US-Patente 5,540,547, 5,392,614 und 5,305,616. Diese Ausgestaltungsformen sind insbesondere bei Triebwerken mit C-Ducts, das heißt mit beidseitig wegklappbaren Fan-Luftkanälen verbreitet.

Als nachteilig erweist es sich bei den vorbekannten Konstruktionen, dass beim Abschalten der Kühlluft die Gehäuse weiterhin dem Ventilationsstrom des Kerntriebwerks ausgesetzt sind. Dies führt zu einer Wärmeübertragung, die eine Abkühlung der Gehäuse und damit eine Verringerung des Kopfspaltes bewirkt. Da sich bei bestimmten Betriebszuständen, beispielsweise bei einem Stillstand des Triebwerks im Flug die Turbinenscheiben wesentlich langsamer abkühlen, als das Gehäuse, kann sich eine Berührung zwischen den Laufschaufeln und dem Gehäuse ergeben, welche zu einer Beschädigung des Triebwerks beim Wiederstart führen kann.

Ein weiterer Nachteil liegt darin, dass die Konstruktion sowie der Aufbau und die Fertigung der das Kerntriebwerk umschließenden Ringleitungen aufwändig und teuer ist.

Die bereits vorgeschlagene Einleitung der Kühlluft in einen Zwischenraum, welcher das Gehäuse der Turbinen umgibt, ist wegen des hohen, dabei auftretenden Drucks, insbesondere bei beidseitig wegklappbaren Fan-Luftkanälen, schwer realisierbar.

Zudem erweist es sich bei den bekannten Konstruktionen als nachteilig, dass es schwierig ist, auch den in Strömungsrichtung gesehen hinteren Teil der Turbinen, insbesondere die Niederdruckturbine geeignet zu kühlen, da die zugeführte Kühlluft sich erwärmt, wenn sie im Bereich der Hochdruckturbine erstmals auf das Turbinengehäuse geleitet wird.

GB 2 048 386 A: Diese Druckschrift zeigt, dass Kühlluft aus einem Bypass-Kanal abgezweigt und über einzelne Rohrleitungen von außen auf das Gehäuse gesprüht wird. Zusätzlich sind weitere, mit Ablassventilen versehene Ringleitungen vorgesehen, durch welche Kompressorluft abgenommen werden kann. Die Aufbringung von Kühlluft aus dem Bypass-Kanal erfolgt nicht in Kammern, sondern durch offenes Aufsprühen.

US 4 849 895 A: Aus diesem Patent ist es bekannt, Luft aus einem Bypass-Kanal abzuzweigen und der Außenseite des Turbinengehäuses zuzuführen. Die Einleitung erfolgt dabei in lediglich eine einzige Kammer.

US 4 069 662 A: Die Konstruktion, welche in dieser Druckschrift gezeigt ist, ähnelt stark der Ausgestaltung der erstgenannten GB-Schrift. Auch hier wird Kühlluft aus einem Bypass-Kanal entnommen und über Ringleitungen von außen auf das Gehäuse geblasen. Die Einbringung in einzelne, aufeinander folgende Kammern ist nicht vorgesehen.

GB 2 103 718 A: Diese Veröffentlichung bezieht sich auf die Kühlung des Turbinengehäuses einer Gasturbine. Hierzu wird Luft von einem Kompressor entnommen und in eine Ringkammer geleitet, welche das Turbinengehäuse umgibt. Es handelt sich hierbei lediglich um eine einzige Ringkammer, welche mit einzelnen, nicht weiter erwähnten innen liegenden Trennrippen versehen ist.

Der Erfindung liegt die Aufgabe zu Grunde, ein Verfahren und eine Vorrichtung der eingangs genannten Art zu schaffen, welche bei einfachem Aufbau und einfacher, betriebssicherer Anwendbarkeit sowohl eine zuverlässige Kühlung der einzelnen Gehäuse oder Gehäusebereiche von Turbinen gewährleisten und andererseits eine unerwünscht starke Abkühlung bei bestimmten Betriebszuständen vermeiden.

Erfindungsgemäß wird die Aufgabe durch die Merkmalskombinationen der beiden unabhängigen Ansprüche gelöst, die jeweiligen Unteransprüche zeigen weitere vorteilhafte Ausgestaltungen der Erfindung.

Hinsichtlich des erfindungsgemäßen Verfahrens ist somit vorgesehen, dass die Kühlluft in eine erste Kammer eingeleitet wird und in dieser Kammer volumenmäßig geteilt wird, wobei ein Teil der Kühlluft aus der ersten Kammer auf die Außenseite des Gehäuses geleitet wird, während ein anderer Teil in eine zweite, der ersten Kammer nachgeordneten Kammer, geleitet und aus dieser auf die Außenseite des Gehäuses aufgebracht wird.

Hinsichtlich der erfindungsgemäßen Vorrichtung ist zur Lösung der Aufgabe somit vorgesehen, dass der Einlaufkanal in zumindest eine erste Kammer mündet, welche mit Austrittsöffnungen zur Zuleitung von Kühlluft zur Außenseite des Gehäuses versehen ist und an welche zumindest eine Rohrleitung angeschlossen ist, die zur Weiterleitung eines Teils der Kühlluft in zumindest eine zweite Kammer mit dieser verbunden ist, wobei die zweite Kammer mit Austrittsöffnungen für Kühlluft zur Außenseite des Gehäuses versehen ist.

Sowohl das erfindungsgemäße Verfahren als auch die erfindungsgemäße Vorrichtung zeichnen sich durch eine Reihe erheblicher Vorteile aus.

Durch die Einleitung der Kühlluft in eine erste Kammer, durch die in der ersten Kammer erfolgende volumenmäßige Aufteilung der Kühlluft und durch die Weiterleitung der Kühlluft über die Rohrleitung in die zweite Kammer ist es möglich, frische, das heißt kalte Kühlluft sowohl aus der ersten Kammer als auch aus der zweiten Kammer auf die Außenseite des Gehäuses der Turbinen aufzubringen. Die aus dem Stand der Technik bekannte unerwünschte Erwärmung der nachfolgend noch zu nutzenden Kühlluft beim ersten Ausleiten auf die Außenseite des Gehäuses kann somit ausgeschlossen werden.

Weiterhin vereinfacht sich der Aufbau erfindungsgemäß ganz erheblich, da relativ große Kammern verwendet werden können, die die entsprechenden Teile des Gehäuses der Turbinen umschließen. Es wird somit ein Ringraum gebildet, der gezielt mit frischer Kühlluft beaufschlagt werden kann. Demgegenüber ist eine Lösung aus dem Stand der Technik mit bekannten ringförmigen Rohrleitungen baulich aufwendiger und damit teurer.

Da erfindungsgemäß die Kammern einen Ringraum bilden, der die Gehäusebereiche der Turbinen umschließt, ist es auf besonders einfache Weise möglich, die Kühlung zu steuern bzw. zu regeln. Bei einem Schließen des Absperrorgans wird ein Ringraum gebildet, der nicht von Kühlluft oder von einem Ventilationsstrom beaufschlagt wird. Es ergibt sich somit die Möglichkeit, das Gehäuse thermisch zu isolieren, um eine unerwünschte Abkühlung oder eine zu starke Abkühlung des Gehäuses zu vermeiden.

Ein weiterer, wesentlicher Vorteil ergibt sich durch die Rohrleitungen, welche die erste Kammer mit der zweiten Kammer verbinden. Diese Rohrleitungen können sehr einfach ausgebildet sein, wodurch sich eine kostengünstige Konstruktion, verglichen mit den aus dem Stand der Technik bekannten ringförmigen Rohrleitungen, ergibt.

Hinsichtlich des Verfahrens ist in einer bevorzugten Weiterbildung der Erfindung vorgesehen, dass die jeweilige Kühlluft nach Zuführung zu der Außenseite des Gehäuses abgeleitet wird. Somit werden die einzelnen Bereiche des Gehäuses jeweils mit frischer, kalter Kühlluft beaufschlagt, um auch im Bereich der Niederdruckturbine die gewünschte Kühlung und damit die erforderliche Einstellung des Kopfspaltes zu realisieren.

Die Ausgestaltung des Kammern als Puffer-Kammern ermöglichen den Aufbau gewünschter Druckverhältnisse, ohne dass unerwünscht hohe Drücke auftreten, die insbesondere bei beidseitig wegklappbaren Fan-Luftkanälen zu hohen mechanischen Belastungen führen würden.

Weiterhin ist es vorteilhaft, dass die Kühlluft über Drosselausnehmungen aus den Kammern abgeleitet werden kann. Hierdurch ist das Strömungsverhalten der Kühlluft gezielt beeinflussbar.

Erfindungsgemäß kann die Kühlluft nach Auftreffen auf die Außenseite des Gehäuses nach hinten in einen Kerntriebwerksraum abgeführt werden. Somit ist ein guter Luftdurchsatz vorhanden.

Bezüglich der Vorrichtung ist es besonders vorteilhaft, dass sowohl die erste als auch die zweite Kammer zumindest teilringförmig ausgebildet sein können. Die Triebwerkskonstruktion gestattet somit eine beidseitig wegklappbare Ausgestaltung, die sich insbesondere im Hinblick auf die Wartungsfreundlichkeit vorteilhaft auswirkt. Demgegenüber ist es jedoch auch möglich, die beiden Kammern als geschlossenen Ringkammer-Konstruktionen vorzusehen.

Um eine ausreichend volumenmäßige Zuleitung von Kühlluft aus der ersten Kammer in die zweite Kammer sicher zu stellen, ist es besonders vorteilhaft, wenn über den Umfang verteilt mehrere Rohrleitungen vorgesehen sind. Die Rohrleitungen können in günstiger Ausgestaltung so ausgebildet und eingebaut sein, dass zur Kompensation von Wärmedehnungen eine Schiebeverbindung mit zumindest einer Kammer vorliegt.

In einer günstigen Weiterbildung der Erfindung ist vorgesehen, dass die erste und die zweite Kammer nach vorn, bezogen auf die Strömungsrichtung der Turbine zu dem Gehäuse abgedichtet sind. Hierdurch kann bei einem geschlossenen Absperrorgan die Innenseite der Kammern das Gehäuse thermisch isolieren.

Vorteilhaft ist es, wenn die zweite Kammer nach hinten offen ist, um eine ungestörte Ableitung der Kühlluft zu bewirken. In der zweiten Kammer kann zumindest ein Strömungsleitelement vorgesehen sein, um eine gleichmäßige Beaufschlagung der Außenseite des Gehäuses mit Kühlluft sicher zu stellen.

Die erste Kammer ist bevorzugterweise einer Hochdruckturbine zugeordnet, während die zweite Kammer im Bereich einer Niederdruckturbine angeordnet ist.

Es versteht sich, dass erfindungsgemäß am Umfang des Gehäuses mehrere Kammern angeordnet sein können, die nur jeweils einen Teil-Umfangsbereich des Gehäuses umschließen. Weiterhin ist es auch möglich, in Strömungsrichtung hintereinander mehrere Kammern vorzusehen, an Stelle der obenbeschriebenen ersten und zweiten Kammer.

Die Funktionsweise der Erfindung ergibt sich somit wie folgt: Über einen oder mehrere von der National Advisory Committee for Aeronautics entwickelte sogenannte NACA-Einläufe und Ventile wird Luft aus dem Bypass-Duct den Kammern zugeführt. Aus der oder den ersten Kammern wird die Kühlluft über Drosselausnehmungen dem Hochdruckturbinengehäuse zugeleitet. Da die erste Kammer in Strömungsrichtung vorne möglichst dicht zum Flansch des Hochdruckturbinengehäuses abschließt, fließt die Kühlluft im Wesentlichen nur nach hinten in den Kerntriebwerksraum. Über der Niederdruckturbine ist eine kanalförmige zweite Kammer angeordnet, die vorne dicht mit dem Gehäuse der Niederdruckturbine abgeschlossen ist und an ihrem hinteren Ende geöffnet ist. Über die einzelnen, steckbaren Rohrleitungen ist diese kanalartige Kammer mit der ersten Kammer der Hochdruckturbinenkühlung verbunden, um Kühlluft zur Kühlung der Niederdruckturbine zuzuführen. Durch das Strömungsleitelement kann die zweite Kammer in Unterkammern unterteilt werden, sodass die über die Rohrleitungen zugeführte Kühlluft gleichmäßig am Umfang des Gehäuses der Niederdruckturbine verteilt wird. Die Luft strömt somit axial am Gehäuse der Niederdruckturbine vorbei und tritt am Ende der zweiten Kammer aus, wobei sie sich mit der Ventilationsluft sowie mit der schon vorher ausgetretenen Kühlluft der ersten Kammer, welche die Hochdruckturbine kühlt mischt und über einen Ringkanal an der Schubdüse des Triebwerks in die Umgebung abströmt.

Durch die einzelnen Rohrleitungen ist ein freier Zugang zu dem Bereich des Gehäuses der Hochdruckturbine möglich. Hierdurch erleichtert sich der Einbau von Versorgung- und Messleitungen gleichermaßen, wie entsprechende Wartungsarbeiten.

Im Folgenden wird die Erfindung anhand eines Ausführungsbeispiels in Verbindung mit der Zeichnung beschrieben. Dabei zeigt:
- Fig. 1: eine schematische, vereinfachte Teil-Ansicht eines Strahltriebwerks unter Verwendung der erfindungsgemäßen Vorrichtung,
- Fig. 2: eine vergrößerte Teil-Ansicht der Darstellung von Fig. 1, und
- Fig. 3: eine vergrößerte, schematische Darstellung der erfindungsgemäßen Rohrleitung.

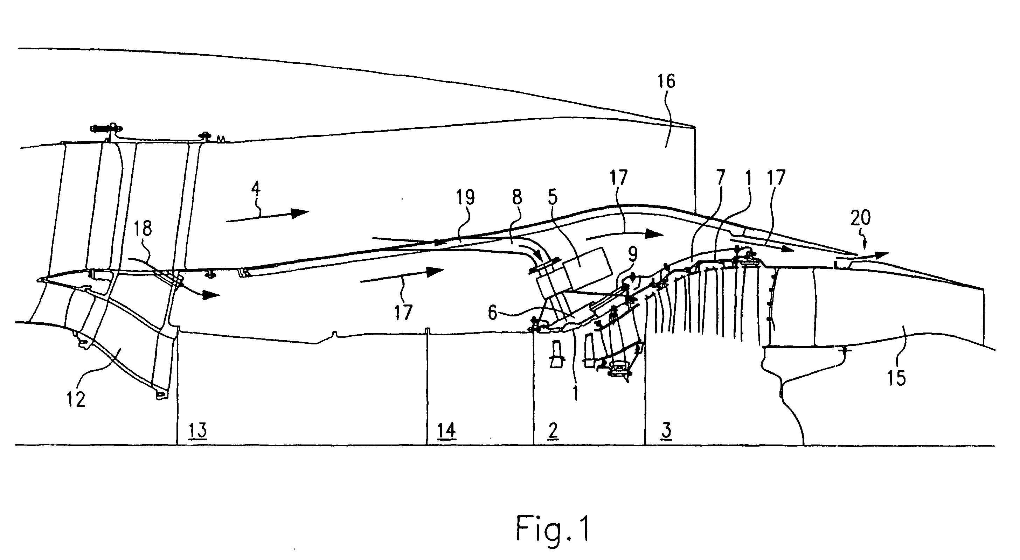

In Fig. 1 ist im Axialschnitt ein Teil eines einen Fan umfassenden Strahltriebwerks dargestellt. Die einzelnen Komponenten sind nur schematisch dargestellt, ihr Aufbau ist aus dem Stand der Technik im Wesentlichen vorbekannt, sodass auf eine detaillierte Diskussion an dieser Stelle verzichtet werden kann.

Die Fig. 1 zeigt ein Gehäuse 1, welches eine Hochdruckturbine 2 sowie eine Niederdruckturbine 3 umschließt. Im Bereich der Hochdruckturbine 2 ist eine erste Kammer 6 angeordnet, die über Rohrleitungen 9 mit einer zweiten Kammer 7 verbunden ist. Kühlluft wird über einen Einlaufkanal 8, der mit einem Absperrorgan (Ventil) 5 versehen ist, von einer Bypass-Strömung 4 zugeführt.

Die Fig. 1 zeigt weiterhin folgende Teile des Strahltriebwerks in vereinfachter Darstellung: einen Einlauf 12 für einen Verdichter 13, eine Brennkammer 14, eine Schubdüse 15 des Kerntriebwerks, eine Schubdüse 16 des Fans, einen Ventilationsstrom 17 mit einer Zuleitungsströmung 18, einen NACA-Einlauf 19 sowie einen Austrittsspalt 20 der Ventilationsströmung 17.

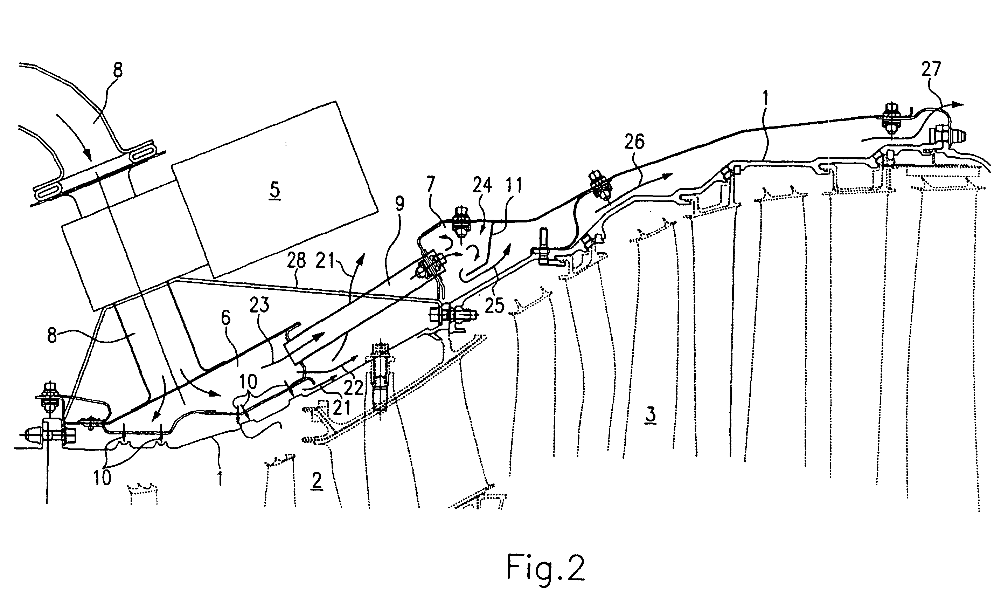

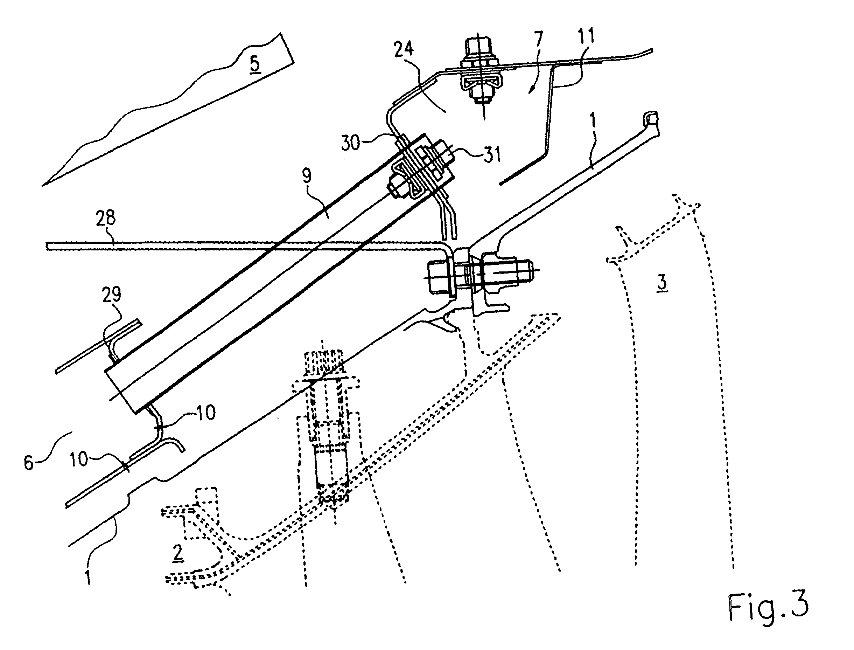

Die erfindungsgemäße Ausgestaltung der Kammern 6 und 7 sowie der Rohrleitung 9 sind in vergrößerter Darstellung in den Fig. 2 und 3 gezeigt. Die Fig. 2 zeigt auch die Durchströmungsverhältnisse durch den Einlaufkanal 8, die erste Kammer 6, die Rohrleitung 9 und die zweite Kammer 7.

Sowohl die erste Kammer 6 als auch die zweite Kammer 7 sind nach vorne jeweils abgedichtet, um einen unerwünschten Eintritt von Luftmengen der Ventilationsströmung 17 zu verhindern. Die erste Kammer 8 ist im Wesentlichen als geschlossene Kammer ausgebildet und weist in Richtung auf das Gehäuse 1 der Niederdruckturbine 2 mehrere Drosselausnehmungen 10 auf. Durch diese tritt, wie durch die Pfeile dargestellt, Kühlluft auf das Gehäuse 1 aus. Diese Kühlluft wird, wie durch den Pfeil 21 dargestellt, am stromabwärtigen Bereich der Kammer 6 abgeleitet und tritt zwischen den Rohrleitungen 9 aus. Der Gehäusebereich, der sich im Bereich der Rohrleitungen 9 befindet, wird durch eine aus der Kammer 6 austretende Kühlluftströmung 22 beaufschlagt. Ein Teil der über den Einlaufkanal 8 zugeführten Kühlluft, der durch den Pfeil 23 dargestellt ist, strömt durch die mehreren Rohrleitungen 9 und tritt in die zweite Kammer 7 ein. Diese ist am strömungsaufwärtigen Ende ebenfalls zum Gehäuse hin abgedichtet und weist in ihrem Inneren ein Strömungsleitelement 11 auf, durch welches eine Beruhigungskammer 24 gebildet wird. Aus diesem tritt die Luftströmung, wie durch den Pfeil 25 gezeigt, aus und durchströmt, siehe Pfeil 26, die zweite Kammer 7, um an deren stromabwärtigen, offenen Ende, wie durch den Pfeil 27 gezeigt, auszuströmen.

Das Absperrorgan 5 kann in Form eines Ventils ausgebildet sein, um die Zuführung von Kühlluft durch den Einlaufkanal 8 zu sperren. Aus der Darstellung der Fig. 2 ergibt sich, dass für diesen Fall der Innenraum der ersten Kammer 6 und der zweiten Kammer 7 einen Isolationsraum bilden, um eine unerwünschte Kühlung des Gehäuses 1 zu verhindern. Mit 28 ist ein Träger für das Absperrorgan 5 dargestellt.

Die Fig. 3 zeigt in vergrößerter Darstellung die Ausgestaltung der einzelnen Rohrleitungen 9. Im Bereich der Wandung der ersten Kammer 6 ist die Rohrleitung 9 mittels einer Steckverbindung 29 gelagert, welche eine Verschiebung zur Kompensation von thermisch bedingten Längenveränderungen ermöglicht. Das stromabwärtige Ende der Rohrleitung 9 ist über einen Flansch 30 und eine Verschraubung 31 fest und dicht mit der Wandung der zweiten Kammer 7 verbunden.

### Bezugszeichenliste

- 1: Gehäuse
- 2: Hochdruck-Turbine
- 3: Niederdruck-Turbine
- 4: Bypass-Strömung
- 5: Absperrorgan (Ventil)
- 6: erste Kammer
- 7: zweite Kammer
- 8: Einlaufkanal
- 9: Rohrleitung
- 10: Drosselausnehmung
- 11: Strömungsleitelement
- 12: Einlauf für Verdichter
- 13: Verdichter
- 14: Brennkammer
- 15: Schubdüse eines Kerntriebwerks
- 16: Schubdüse des Fans
- 17: Ventilationsströmung
- 18: Zuleitung der Ventilationsströmung
- 19: NACA-Einlauf
- 20: Austrittsspalt der Ventilationsströmung 17
- 21: Luftströmung
- 22: Luftströmung
- 23: Luftströmung
- 24: Beruhigungskammer
- 25: Luftströmung
- 26: Luftströmung
- 27: Luftströmung
- 28: Träger für Absperrorgan 5
- 29: Steckverbindung
- 30: Flansch
- 31: Verschraubung

## Patentansprüche

1. Verfahren zum Kühlen des Gehäuses (1) von Turbinen (2, 3) von Strahltriebwerken, bei welchem Kühlluft aus einer Bypass-Strömung (4) abgezweigt und über einen mit einem Absperrorgan (5) versehenen Einlaufkanal (8) der Außenseite des Gehäuses (1) zugeleitet wird, wobei die Kühlluft in eine erste Kammer eingeleitet wird und wobei ein Teil der Kühlluft aus der ersten Kammer auf die Außenseite des Gehäuses geleitet wird, **dadurch gekennzeichnet, dass** die Kühlluft in der ersten Kammer volumenmäßig geteilt wird, wobei ein Teil der Kühlluft aus der ersten Kammer (6) auf die Außenseite des Gehäuses geleitet wird, während ein anderer Teil in eine zweite, der ersten Kammer nachgeordnete Kammer (7) und aus dieser auf die Außenseite des Gehäuses (1) aufgebracht wird.

2. Verfahren nach Anspruch 1, **dadurch gekennzeichnet, dass** die jeweilige Kühlluft nach Zuführung zu der Außenseite des Gehäuses (1) abgeleitet wird.

3. Verfahren nach Anspruch 1 oder 2, **dadurch gekennzeichnet, dass** die Kammern (6, 7) als Puffer-Kammern wirken.

4. Verfahren nach einem der Ansprüche 1 bis 3, **dadurch gekennzeichnet, dass** die Kühlluft über Drosselausnehmungen (10) aus den Kammern (6, 7) abgeleitet wird.

5. Verfahren nach einem der Ansprüche 1 bis 4, **dadurch gekennzeichnet, dass** die Kühlluft nach Auftreffen auf die Außenseite des Gehäuses (1) nach hinten in einen Kerntriebwerksraum abgeführt wird.

6. Vorrichtung zur Kühlung des Gehäuses (1) von Turbinen (2, 3) von Strahltriebwerken mit zumindest einem Einlaufkanal (8) zur Einleitung von Kühlluft aus einer Bypass-Strömung (4) und mit zumindest einem dem Einlaufkanal (7) zugeordneten Absperrorgan (5), wobei der Einlaufkanal (8) in zumindest eine erste Kammer (6) mündet, welche mit Austrittsöffnungen zur Zuleitung von Kühlluft zur Außenseite des Gehäuses versehen ist, **dadurch gekennzeichnet, dass** an die erste Kammer (6) zumindest eine Rohrleitung angeschlossen ist, die zur Weiterleitung eines Teils der Kühlluft in zumindest eine zweite Kammer (7) mit dieser verbunden ist, wobei die zweite Kammer (7) mit Austrittsöffnungen für Kühlluft zur Außenseite des Gehäuses (1) versehen ist.

7. Vorrichtung nach Anspruch 6, **dadurch gekennzeichnet, dass** die erste (6) und die zweite (7) Kammer zumindest teilringförmig ausgebildet sind.

8. Vorrichtung nach Anspruch 6, **dadurch gekennzeichnet, dass** die erste (6) und die zweite (7) Kammer als Ringkammern ausgebildet sind.

9. Vorrichtung nach einem der Ansprüche 6 bis 8 **dadurch gekennzeichnet, dass** die über den Umfang verteilt mehrere Rohrleitungen (9) vorgesehen sind.

10. Vorrichtung nach einem der Ansprüche 6 bis 9, **dadurch gekennzeichnet, dass** die erste Kammer (6) zur Außenseite des Gehäuses (1) mit Drosselausnehmungen (10) versehen ist.

11. Vorrichtung nach einem der Ansprüche 6 bis 10, **dadurch gekennzeichnet, dass** die erste (6) und die zweite (7) Kammer nach vorne, bezogen auf die Strömungsrichtung der Turbine zu dem Gehäuse (1) abgedichtet sind.

12. Vorrichtung nach einem der Ansprüche 6 bis 11, **dadurch gekennzeichnet, dass** die zweite Kammer (6) nach hinten offen ist.

13. Vorrichtung nach einem der Ansprüche 6 bis 12, **dadurch gekennzeichnet, dass** die in der zweiten Kammer (7) zumindest ein Strömungsleitelement (11) angeordnet ist.

14. Vorrichtung nach einem der Ansprüche 6 bis 13, **dadurch gekennzeichnet, dass** die erste Kammer (6) einer Hochdruckturbine (2) zugeordnet ist.

15. Vorrichtung nach einem der Ansprüche 6 bis 14, **dadurch gekennzeichnet, dass** die zweite Kammer (7) einer Niederdruckturbine (3) zugeordnet ist.

16. Vorrichtung nach einem der Ansprüche 6 bis 15, **dadurch gekennzeichnet, dass** am Umfang des Gehäuses (1) mehrere Kammern angeordnet sind.

17. Vorrichtung nach einem der Ansprüche 6 bis 16, **dadurch gekennzeichnet, dass** in Strömungsrichtung hintereinander mehrere Kammern angeordnet sind.

18. Vorrichtung nach einem der Ansprüche 6 bis 17, **dadurch gekennzeichnet, dass** die Rohrleitung (9) zur Kompensation Wärmedehnungen mit zumindest einer Kammer mittels einer Schiebeverbindung verbunden ist.

19. Vorrichtung nach einem der Ansprüche 6 bis 18, **dadurch gekennzeichnet, dass** die Kammern (6, 7) als Puffer-Kammern ausgebildet sind.

## Claims

1. Method for the cooling of the casings (1) of turbines (2, 3) of jet engines, in which cooling air is branched off from a bypass flow (4) and supplied to the outer side of the casing (1) via an inlet duct (8) provided with a shut-off element (5), with the cooling air being fed into a first chamber, and with a portion of the cooling air from the first chamber being applied to the outer side of the casing, **characterised in that** the cooling air volume is divided in the first chamber (6), with a portion of the cooling air from the first chamber (6) being fed to the outer side of the casing (1) and another portion to a second chamber (7) downstream of the first chamber and being applied to the outer side of casing (1) from this second chamber (7).

2. Method in accordance with Claim 1, **characterised in that** the respective cooling air is discharged upon application to the outer side of the casing (1).

3. Method in accordance with Claim 1 or 2, **characterised in that** the chambers (6, 7) act as buffer chambers.

4. Method in accordance with one of the preceding Claims 1 to 3, **characterised in that** the cooling air is discharged from the chambers (6, 7) via orifice holes (10).

5. Method in accordance with one of the preceding Claims 1 to 4, **characterised in that** the cooling air is discharged downstream into a core engine area upon impingement onto the outer side of the casing (1).

6. Apparatus for the cooling of the casings (1) of turbines (2, 3) of jet engines with at least one inlet duct (8) for the introduction of cooling air from a bypass flow (4) and with at least one shut-off element (5) associated to the inlet duct (8), with the inlet duct (8) issuing into at least one first chamber (6) which is provided with exit ports for the supply of cooling air to the outer side of the casing, **characterised in that** the first chamber (6) is connected to at least one tube which connects to at least a second chamber (7) for the transport of a portion of the cooling air to the second chamber (7), with the second chamber (7) being provided with exit ports for the application of cooling air to the outer side of the casing (1).

7. Apparatus in accordance with Claim 6, **characterised in that** the first chamber (6) and the second chamber (7) are at least part-annular.

8. Apparatus in accordance with Claim 6, **characterised in that** the first chamber (6) and the second chamber (7) are designed as annular chambers.

9. Apparatus i n accordance with one of the preceding C laims 6 to 8, **characterised in that** several tubes (9) distributed on the circumference are provided.

10. Apparatus i n accordance with one of the preceding Claims 6 to 9, **characterised in that** the first chamber (6) is provided with orifice holes (10) towards the outer side of the casing (1).

11. Apparatus in accordance with one of the preceding Claims 6 to 10, **characterised in that** the first chamber (6) and the second chamber (7) are sealed to the casing (1) at their upstream side, in relation to the direction of flow of the turbine.

12. Apparatus in accordance with one of the preceding Claims 6 to 11, **characterised in that** the second chamber (6) is open downstream.

13. Apparatus in accordance with one of the preceding Claims 6 to 12, **characterised in that** the second chamber (7) contains at least one baffle (11).

14. Apparatus in accordance with one of the preceding Claims 6 to 13, **characterised in that** the first chamber (6) is associated with a highpressure turbine (2).

15. Apparatus in accordance with one of the preceding Claims 6 to 14, **characterised in that** the second chamber (7) is associated with a low-pressure turbine (3).

16. Apparatus in accordance with one of the preceding Claims 6 to 15, **characterised in that** several chambers are arranged on the circumference of the casing (1).

17. Apparatus in accordance with one of the preceding Claims 6 to 16, **characterised in that** several chambers are arranged one behind the other in the direction of flow.

18. Apparatus in accordance with one of the preceding Claims 6 to 17, **characterised in that** the tube (9) is slideably connected with at least one chamber to compensate for thermal expansion.

19. Apparatus in accordance with one of the preceding Claims 6 to 18, **characterised in that** the chambers (6, 7) are designed as buffer chambers.

## Revendications

1. Procédé pour refroidir le carter (1) de turbines (2, 3) de réacteurs, dans lequel l'air de refroidissement est prélevé sur un flux-bipasse (4) et dirigé sur l'extérieur du carter (1) par un canal d'admission (8) muni d'un organe d'arrêt (5), sachant que l'air de refroidissement est introduit dans une première chambre et qu'une partie de l'air de refroidissement de la première chambre est dirigée sur l'extérieur du carter, **caractérisé en ce que** l'air de refroidissement est subdivisé en volume dans la première chambre, une partie de l'air de refroidissement de la première chambre (6) étant dirigée sur l'extérieur du carter, alors qu'une autre partie est introduite dans une deuxième chambre (7) placée en aval de la première chambre, puis en sort pour être appliquée sur l'extérieur du carter (1).

2. Procédé selon la revendication 1, **caractérisé en ce que** l'air de refroidissement est dérivé après avoir été amené vers l'extérieur du carter (1).

3. Procédé selon la revendication 1 ou 2, **caractérisé en ce que** les chambres (6, 7) agissent en tant que chambres-tampon.

4. Procédé selon une des revendications 1 à 3, **caractérisé en ce que** l'air de refroidissement est prélevé des chambres (6, 7) par l'intermédiaire d'orifices d'étranglement (10).

5. Procédé selon une des revendications 1 à 4, **caractérisé en ce que** l'air de refroidissement est évacué vers l'arrière dans une zone du coeur du moteur après être passé sur l'extérieur du carter (1).

6. Dispositif pour refroidir le carter (1) de turbines (2, 3) de réacteurs avec au moins un canal d'admission (8) destiné à introduire de l'air de refroidissement prélevé sur un flux-bipasse (4) et avec au moins un organe d'arrêt (5) affecté au canal d'admission (8), le canal d'admission (8) débouchant dans au moins une première chambre (6) munie d'orifices de sortie pour acheminer de l'air de refroidissement sur l'extérieur du carter, **caractérisé en ce qu'**à la première chambre (6) est raccordée au moins une conduite reliée à au moins une deuxième chambre (7) pour transférer une partie de l'air de refroidissement dans celle-ci, la deuxième chambre (7) étant munie d'orifices de sortie pour l'air de refroidissement vers l'extérieur du carter (1).

7. Dispositif selon la revendication 6, **caractérisé en ce que** la première (6) et la deuxième (7) chambre ont une forme au moins partiellement annulaire.

8. Dispositif selon la revendication 6, **caractérisé en ce que** la première (6) et la deuxième (7) chambre sont conçues en tant que chambres annulaires.

9. Dispositif selon une des revendications 6 à 8, **caractérisé en ce que** plusieurs conduites (9) sont réparties sur la circonférence.

10. Dispositif selon une des revendications 6 à 9, **caractérisé en ce que** la première chambre (6) est pourvue d'orifices d'étranglement (10) vers l'extérieur du carter (1).

11. Dispositif selon une des revendications 6 à 10, **caractérisé en ce que** la première (6) et la deuxième (7) chambre sont colmatées par rapport au carter (1) vers l'avant en référence au sens d'écoulement de la turbine.

12. Dispositif selon une des revendications 6 à 11, **caractérisé en ce que** la deuxième chambre (6) est ouverte vers l'arrière.

13. Dispositif selon une des revendications 6 à 12, **caractérisé en ce qu'**au moins un élément de guidage du flux (11) est prévu dans la deuxième chambre (7).

14. Dispositif selon une des revendications 6 à 13, **caractérisé en ce que** la première chambre (6) est affectée à une turbine haute pression (2).

15. Dispositif selon une des revendications 6 à 14, **caractérisé en ce que** la deuxième chambre (7) est affectée à une turbine basse pression (3).

16. Dispositif selon une des revendications 6 à 15, **caractérisé en ce que** plusieurs chambres sont disposées sur la circonférence du carter (1).

17. Dispositif selon une des revendications 6 à 16, **caractérisé en ce que** plusieurs chambres sont disposées en série dans le sens d'écoulement.

18. Dispositif selon une des revendications 6 à 17, **caractérisé en ce que** la conduite (9) est reliée à au moins une chambre par un raccord coulissant pour compenser la dilatation thermique.

19. Dispositif selon une des revendications 6 à 18, **caractérisé en ce que** les chambres (6, 7) sont conçues en tant que chambres-tampon.
